# EUROPEAN PATENT APPLICATION

(11) **EP 1 835 313 A1**
(43) Date of publication of application: **19.09.2007**
(21) Application number: 06300246.3
(22) Date of filing: 17.03.2006
(51) Int. Cl.: G02B 3/14

(54) **Driver control circuitry for liquid lens**

(71) Applicant: Varioptic, 69007 Lyon (FR)
(72) Inventor: Morichaud, Gwenaël, 38290 Frontonas (FR)
(74) Representative: de Beaumont, Michel

(57) **Abstract**

The invention concerns control circuitry (100) for driving a liquid lens (102) with a required drive voltage (V_{OUTA}, V_{OUTB}), the liquid lens comprising first and second immiscible liquids, an interface between the first and second liquids being moveable by electrowetting by application of said drive voltage, the control circuitry comprising:
signal generating means (148) arranged to generate a pulsed signal comprising pulses, each pulse having a width modulated based on said required drive voltage;
a filter (110) arranged to filter said pulsed signal to generate an analogue control voltage (V_{c});
and drive circuitry (104, 106, 108) arranged to generate said required drive voltage based on said control voltage.

## Description

### FIELD OF THE INVENTION

The present invention relates to a circuit for driving a liquid lens, and in particular to a driving circuit for driving a liquid lens having liquids moveable by electrowetting.

### BACKGROUND OF THE INVENTION

A number of embodiments of variable focus liquid lenses are described in European patent N°1166157 in the name of the present applicant. Figure 1 of the present application corresponds to Figure 12 of that patent. As shown in Figure 1, an optical lens comprises two insulating transparent plates 1 and 2. Plate 2 comprises a conical or cylindrical recess, with a side face 4 inclined with respect to the optical axis Δ of the device, and which receives a drop of a first liquid 6 which is an insulating liquid. The remainder of the chamber extending up to transparent plate 1 is filled with a second liquid 8, which is conductive. The liquids are immiscible, and have different refraction indexes but roughly the same density. A transparent electrode 10 is formed over the outer surface of transparent plate 2. Another electrode 12 is provided in contact with liquid 8.

Due to the electrowetting effect, it is possible, by applying a voltage between electrodes 10 and 12, to change the curvature of the interface between the first liquid 6 and the second liquid 8, for example, from an initial concave shape as shown by line A, to a convex shape as shown by line B. Thus rays of light passing through the cell perpendicular to the plates 1 and 2 in the region of the drop 6 will be focused more or less depending on the voltage applied.

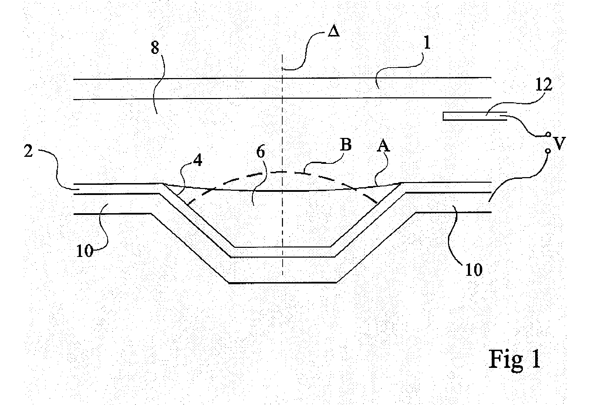

A driver circuit is required to generate the voltages for controlling liquid lenses such as the liquid lens of figure 1. However, when liquid lenses similar to that of Figure 1 are used in compact devices such as mobile telephones, circuit area is limited and thus a driver circuit is needed that uses minimal area, and that meets the other constraints imposed by mobile telephone applications.

### SUMMARY OF THE INVENTION

It is an object of the present invention to provide control circuitry for driving a liquid lens device which at least partially addresses the above needs.

According to one aspect of the present invention there is provided Control circuitry for driving a liquid lens with a required drive voltage, the liquid lens comprising first and second immiscible liquids, an interface between the first and second liquids being moveable by electrowetting by application of said drive voltage, the control circuitry comprising: signal generating means arranged to generate a pulsed signal comprising pulses, each pulse having a width modulated based on said required drive voltage; a filter arranged to filter said pulsed signal to generate an analogue control voltage; and drive circuitry arranged to generate said required drive voltage based on said control voltage.

### BRIEF DESCRIPTION OF THE DRAWINGS

In the drawings:
Figure 1 illustrates schematically an embodiment of a known variable focus liquid lens;
Figure 2 illustrates schematically control circuitry for driving a liquid lens according to one embodiment of the present invention;
Figure 3 illustrates schematically the DC-DC generator of Figure 2 according to one embodiment; and
Figure 4 illustrates the H-bridge of Figure 2 according to one embodiment.

For clarity, throughout the figures, like reference numbers have been used for corresponding features.

### DETAILED DESCRIPTION OF PREFERRED EMBODIMENTS

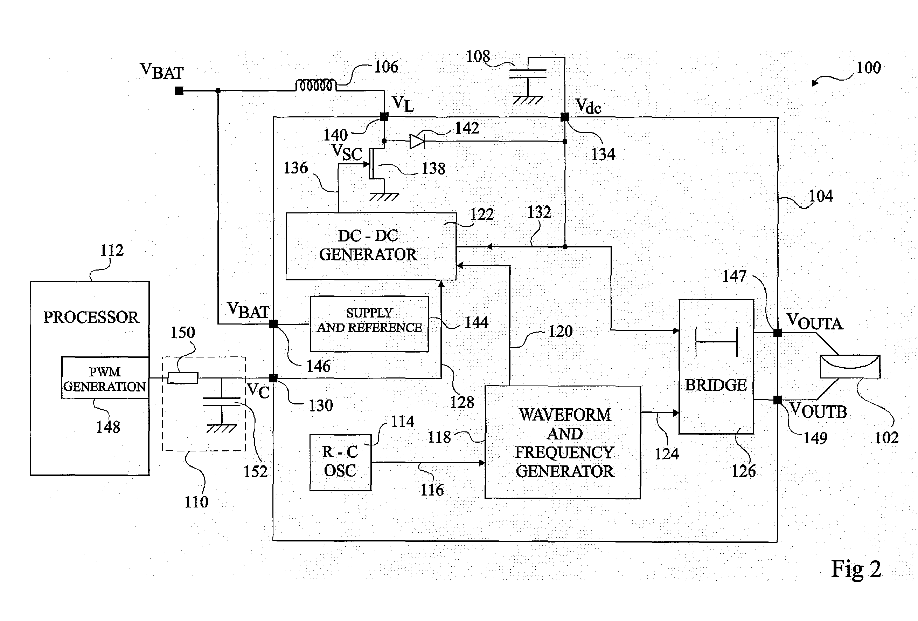

With reference to Figure 2, control circuitry 100 is shown for driving a liquid lens 102. Liquid lens 102 comprises first and second liquids, an interface between the liquids being moveable by electrowetting by application of a voltage, preferably an oscillating voltage. The voltage is applied between two electrodes in the lens. The liquid lens is for example a liquid lens according to the embodiment of Figure 1 described above.

The control circuitry comprises an integrated circuit (IC) 104, an inductor 106, a first capacitor 108 and an RC (resistor capacitor) filter 110. The circuitry is powered by a DC source V_{BAT} which is for example the battery of a mobile phone. A processor block 112 is connected to IC 104 via the filter 110, and is for example the baseband processor of a mobile telephone, or an image sensing processor (ISP) provided in a mobile telephone.

The IC 104 comprises an R-C (resistor capacitor) oscillator 114 which generates an oscillating voltage on line 116 which is provided to a waveform and frequency generator block 118. Waveform and frequency generator block 118 processes the oscillating signal from the R-C oscillator 114 and generates oscillating signals having a required frequency for output on lines 120 to a DC-DC generator 122, and on line 124 to an H-bridge 126.

DC-DC generator 122 also receives a control voltage V_{c} from the output of filter 110 on line 128, via input pin 130, and the voltage V_{dc} across capacitor 108 on line 132, via input pin 134. Based on these inputs, DC-DC generator 122 generates a switch control voltage V_{SC} on line 136 to the gate terminal of a MOSFET (metal oxide semiconductor field effect transistor) 138. The first and second main current terminals of MOSFET 138 are connected to ground and to a first terminal of inductor 106 via input pin 140 respectively.

Input pin 140 is also connected to input pin 134 via a diode 142. The second terminal of inductor 106 is connected to the DC source V_{BAT}.

DC source V_{BAT} is also connected to a supply and reference block 144 via input pin 146, this block distributing power where required to the circuitry on IC 104.

In operation, MOSFET 138 is switched by DC-DC generator 122 such that current is driven through inductor 106 to capacitor 108 via input pin 140 and diode 142. In particular, when MOSFET 138 is switched on, current is driven through inductor 106 to ground. When MOSFET 138 is switched off, current continues to flow through inductor 106, and is driven through diode 142 to charge capacitor 108. Diode 142 prevents capacitor 108 from discharging back through MOSFET 138. In this way a DC voltage V_{dc} is generated across capacitor 108 at pin 134 which can be much higher than V_{BAT}, for example as high as 60 V, and variable between 0 V and 60 V. This generated voltage V_{dc} is provided to H-bridge 126, where is it transformed, based on the signal from waveform and frequency generator 118, into an oscillating AC voltage across the electrodes of the liquid lens 102. In particular, two outputs V_{OUTA} and V_{OUTB} are provided to the liquid lens, at output pins 147 and 149 respectively, each alternately being driven by voltage V_{dc}, such that the oscillating voltage has a peak to peak amplitude of 2V_{dc}.

The amplitude of the oscillating voltage to the liquid lens 102 needs to be finely controlled such that the focusing of the lens can be controlled with sufficient precision. In particular, it is necessary that the voltage can be controlled in steps that are at least as small as 60 mV. To achieve this, the control voltage V_{c} on line 128 to DC-DC generator 122 is provided, and DC-DC generator 122 switches MOSFET 138 based on this input, to adjust the generated voltage V_{dc}. A feedback path for V_{dc} is provided to DC-DC generator 122 via line 132. The control voltage V_{c} is for example in the range 0 to 2 V, corresponding to a generated voltage range of 0 to 60 V. The control voltage V_{c} is provided by processor block 112 and filter 110 as will now be described in more detail.

Algorithms are preferably used to determine the required drive voltage to drive the liquid lens. Such algorithms can be processed by the baseband processor or ISP of a mobile phone or similar processing means, as indicated by processor block 112. Processor block 112 further comprises pulse width modulation (PWM) generation circuitry 148 that generates a square wave with pulse widths that are modulated. In particular, the pulse width of the square wave is modulated based on the required voltage for driving the liquid lens 102, as determined by the appropriate algorithm.

The PWM signal generated by the PWM generation block 148 is provided to RC filter 110, which comprises a resistor 150 connected between the PWN generation block and input pin 130 of IC 104, and a capacitor 152 connected between input pin 130 and ground. The capacitor 152 is for example roughly 100 nF and the resistor 150 is for example approximately 10 kilo Ohms. The filter converts the PWM signal into the DC control voltage V_{c}, such that based on the modulation of the signal, the DC voltage level of V_{c} is precisely controlled.

In order to allow control of the drive voltage Vdc with sufficient precision, the PWM generation circuitry 148 preferably allows the pulse width of the PWM signal to be modulated based on at least 10 or 12 bits of data. Assuming a square wave from the PWM generation circuitry having an amplitude of 2 V, and 10 bits being used to modulate this square wave, this would allow the voltage at V_{c} to be controlled in the range 0 to 2 V having a step size of approximately 2 mV. Assuming Vdc can vary between 0 and 60 V, V_{dc} can thus be controlled having a step size of approximately 58 mV.

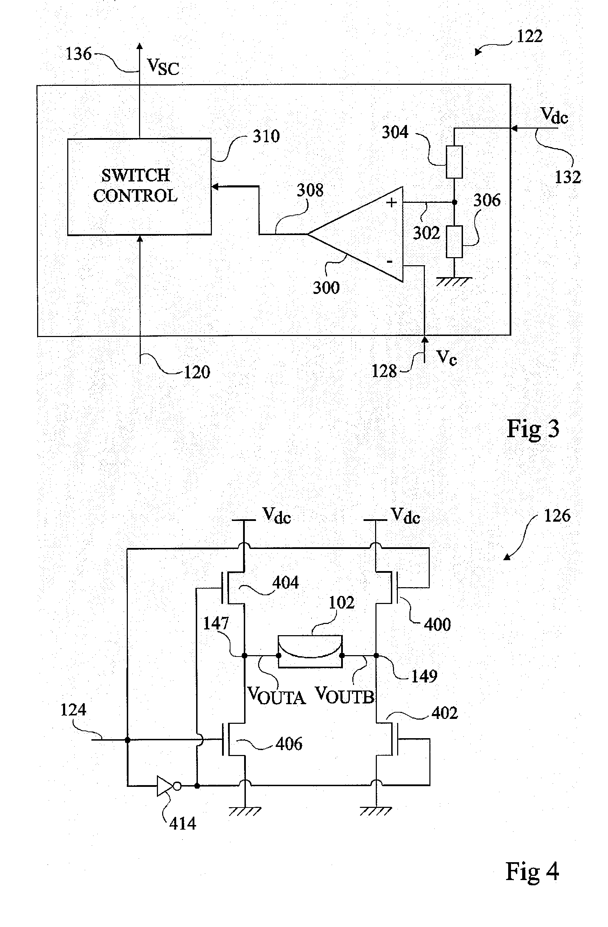

The DC-DC generator 122 of Figure 2 is shown in more detail in Figure 3. As shown in Figure 3, it comprises an operation amplifier (Op amp) 300 having two differential inputs, a first receiving the control voltage V_{c} on line 128 and the second connected to line 302 which is connected to ground via a first resistor 306, and to V_{dc} on line 132 via a second resistor 304. The first and second resistors act as a potential divider dividing the voltage V_{dc} to a suitable value for comparison with V_{c}, for example dividing V_{dc} by thirty if 2 V of V_{c} corresponds to 60 V of V_{dc}. Op amp 300 provides an output on line 308 to a switch control block 310.

Switch control block 310 also receives the signal on line 120 generated by the waveform and frequency generator 118, and adjusts this signal based on the output of Op amp 300 to provide the switch control signal V_{SC} on line 136 to MOSFET 138.

The H-bridge 126 of Figure 2 is shown in more detail in Figure 4. H-bridge 126 comprises four MOSFETs 400, 402, 404 and 406. First and second MOSFETS 400, 402 are connected in series via their main current terminals between the voltage V_{dc} provided at input pin 134 of IC 104, and ground. Third and fourth MOSFETS 404, 406 are also connected in series via their main current terminals between the voltage V_{dc} provided at input pin 134 of IC 104, and ground. Liquid lens 102 is connected between output pin 147 of IC 104 which is connected to the node between the third and fourth MOSFETs 404, 406 and output pin 149 of IC 104 which is connected to the node between the first and second MOSFETs 400, 402.

The gate terminals of the first and fourth MOSFETs 400, 406 are connected to line 124 and thus receive the signal generated by waveform and frequency generator 118, which is preferably a square wave. The gate terminals of the second and third MOSFETs 402, 404 are connected to line 124 via an invertor 414. In this way the MOSFETs are alternatively controlled such that the first and fourth MOSFETs 400, 406 are switched on whilst the second and third MOSFETS 402, 404 are switched off, and then the second and third MOSFETS 402, 404 are switched on whilst the first and fourth MOSFETs 400, 406 are switched off.

Whilst embodiments of the present invention have been described above as being incorporated in a mobile telephone, embodiments of the invention could be incorporated in different applications, in particular applications in which area is restricted. This includes mobile devices in general, for example laptop computer, PDAs (personal digital assistants) or wireless local area network devices, or other devices.

Having thus described at least one illustrative embodiment of the invention, various alterations, modifications and improvements will readily occur to those skilled in the art. Such alterations, modifications and improvements are intended to be within the scope of the invention. Accordingly, the foregoing description is by way of example only and is not intended to be limiting. The invention is limited only as defined in the following claims and the equivalent thereto.

## Claims

1. Control circuitry (100) for driving a liquid lens (102) with a required drive voltage (V_{OUTA}, V_{OUTB}), the liquid lens comprising first and second immiscible liquids, an interface between the first and second liquids being moveable by electrowetting by application of said drive voltage, the control circuitry comprising:
signal generating means (148) arranged to generate a pulsed signal comprising pulses, each pulse having a width modulated based on said required drive voltage;
a filter (110) arranged to filter said pulsed signal to generate an analogue control voltage (V_{c});
and drive circuitry (104, 106, 108) arranged to generate said required drive voltage based on said control voltage.

2. The control circuitry of claim 1 further comprising processing means arranged to determine the value of said required drive voltage.

3. The control circuitry of claim 1 wherein said signal generating means (148) generates said pulsed signal based on at least 10 bits of control data, said control data based on said required drive voltage.

4. The control circuitry of claim 1 wherein said required drive voltage is controlled having a step size of approximately 60 mV or less.

5. The control circuitry of claim 1 wherein said drive circuitry comprises DC voltage generating means (106, 138, 142, 108) for generating a DC voltage (V_{dc}) of a required level for generating said required drive voltage.

6. The control circuitry of claim 5 wherein said required drive voltage is an oscillating voltage and said drive circuitry comprises an H-bridge arranged to receive said DC voltage (V_{dc}) and to generate said required drive voltage.

7. The control circuitry of claim 5 wherein said drive circuitry comprises comparing means (300, 304, 306) arranged to compare said control voltage (V_{c}) with said DC voltage (V_{dc}) and to control said DC voltage generating means (106, 138, 142, 108) based on said comparison.

8. The control circuitry of claim 7 wherein said comparing means (300, 304, 306) comprises a potential divider (304, 306) for dividing said DC voltage (V_{dc}) before it is compared with said control voltage (V_{c}).

9. The control circuitry of claim 1 wherein said filter is an RC filter (110) comprising at least one capacitor (152) and at least one resistor (150).

10. A mobile device comprising the control circuitry (100) of any preceding claim.
